(19) Europäisches Patentamt
European Patent Office
Office européen des brevets

(11) **EP 1 606 668 B1**

(12) **EUROPÄISCHE PATENTSCHRIFT**

(45) Veröffentlichungstag und Bekanntmachung des Hinweises auf die Patenterteilung:
**03.03.2010 Patentblatt 2010/09**

(21) Anmeldenummer: **03816434.9**

(22) Anmeldetag: **19.12.2003**

(51) Int Cl.:
**G02C 7/02** *(2006.01)*

(86) Internationale Anmeldenummer:
**PCT/EP2003/014620**

(87) Internationale Veröffentlichungsnummer:
**WO 2004/086125 (07.10.2004 Gazette 2004/41)**

(54) **VERFAHREN ZUM BERECHNEN EINES INDIVIDUELLEN PROGRESSIVGLASES**

METHOD FOR CALCULATING AN INDIVIDUAL PROGRESSIVE LENS

PROCEDE POUR CALCULER UN VERRE PROGRESSIF INDIVIDUEL

(84) Benannte Vertragsstaaten:
**DE ES FR GB IT**

(30) Priorität: **24.03.2003 DE 10313275**

(43) Veröffentlichungstag der Anmeldung:
**21.12.2005 Patentblatt 2005/51**

(73) Patentinhaber: **Rodenstock GmbH**
**80469 München (DE)**

(72) Erfinder:
• **HASER, Stephan**
**81829 München (DE)**
• **WELK, Andrea**
**81547 München (DE)**
• **ESSER, Gregor**
**81735 München (DE)**
• **ALTHEIMER, Helmut**
**87650 Baisweil-Lauchdorf (DE)**
• **HAIMERL, Walter**
**80337 München (DE)**

(74) Vertreter: **Müller-Boré & Partner**
**Patentanwälte**
**Grafinger Strasse 2**
**81671 München (DE)**

(56) Entgegenhaltungen:
WO-A-01/81979    DE-A- 4 210 008
DE-A- 19 917 314    US-A- 5 861 935

• **W. KÖPPEN: "Konzeption und Entwicklung von Progressivgläsern" 43. SONDERDRUCK DER WVAO, 1995, Seiten 92-97,**

**EP 1 606 668 B1**

## Beschreibung

Die Erfindung betrifft ein Verfahren zum Berechnen eines individuellen Progressivglases.

Unter progressiven Brillengläsern (auch als Gleitsichtgläser, Mulitfokalgläser, etc. bezeichnet) versteht man üblicherweise Brillengläser, die in dem Bereich, durch den der Brillenträger einen in größerer Entfernung befindlichen Gegenstand betrachtet - im folgenden als Fernteil bezeichnet -, eine andere (geringere) Brechkraft haben als in dem Bereich (Nahteil), durch den der Brillenträger einen nahen Gegenstand betrachtet. Zwischen dem Fernteil und dem Nahteil ist die sogenannte Progressionszone angeordnet, in der die Wirkung des Brillenglases von der des Fernteils kontinuierlich auf die des Nahteils ansteigt. Den Wert des Wirkungsanstiegs bezeichnet man auch als Addition.

In der Regel ist der Fernteil im oberen Teil des Brillenglases angeordnet und für das Blicken "ins Unendliche" ausgelegt, während der Nahteil im unteren Bereich angeordnet ist, und insbesondere zum Lesen ausgelegt ist. Für Spezialanwendungen - genannt werden sollen hier exemplarisch Pilotenbrillen oder Brillen für Bildschirmarbeitsplätze - können der Fern- und der Nahteil auch anders angeordnet sein und/oder für andere Entfernungen ausgelegt sein.

Ferner ist es möglich, dass mehrere Nahteile und/oder mehrere Fernteile und entsprechende Proggressionszonen vorhanden sind.

Bei progressiven Brillengläsern mit konstantem Brechungsindex ist es für die Zunahme der Brechkraft zwischen dem Fernteil und dem Nahteil erforderlich, dass sich die Krümmung einer oder beider Flächen vom Fernteil zum Nahteil kontinuierlich ändert.

Die Flächen von Brillengläsern werden üblicherweise durch die sogenannten Hauptkrümmungsradien R1 und R2 in jedem Punkt der Fläche charakterisiert. (Manchmal werden anstelle der Hauptkrümmungsratin auch die sogenannten Hauptkrümmungen K1 = 1/R1 und K2 = 1/R2 angegeben). Die Hauptkrümmungsradien bestimmen zusammen mit dem Brechungsindex n des Glasmaterials die für die augenoptische Charakterisierung einer Fläche häufig verwen-deten Größen:

$$\text{Flächenbrechwert} \quad D = 0,5 * (n-1) * (1/R1 + 1/R2).$$

$$\text{Flächenastigmatismus } A = \quad (n-1) * (1/R1 - 1/R2).$$

Der Flächenbrechwert D ist die Größe, über die die Zunahme der Wirkung vom Fernteil zum Nahteil erreicht wird. Der Flächenastigmatismus A (anschaulich zylinderwirkung) ist eine "störende Eigenschaft", da ein Astigmatismus - sofern das Auge nicht selbst einen zu korrigierenden Astigmatismus aufweist - , der einen Wert von ca. 0,5 dpt übersteigt, zu einem als unscharf wahrgenommenen Bild auf der Netzhaut führt.

In der WO 01/81979 wird ein Verfahren zum Berechnen eines progressiven Brillenglases angegeben, bei dem entlang einer Linie (Hauptlinie) bestimmte Eigenschaften vom Brechwert und Astigmatismus vorliegen und diese Linie mit der Hauptblicklinie übereinstimmt.

Die Druckschrift "Konzeption und Entwicklung von Progressivgläsern", W. Köppen, 47. Sonderdruck der WVAO, 1995, Seiten 92 bis 97 erhält einen Überblick des Ablaufs eines Entwicklungsprozesses eines Gleitsichtglases. Zunächst wird anhand physiologischer Anforderung ein Design für das Gleitsichtglas festgelegt. Das Design, d.h. die Geometrie eines Gleitsichtglases zu berechnen, bedeutet verschiedene Zonen (räumlich) nebeneinander auf dem Glas anzuordnen, die bei natürlichen Sehen in die Ferne, Nähe und die Zwischenentfernungen (zeitlich) nacheinander benutzt werden. Diese Vorgaben sind das Ergebnis von Experimenten, welche die einzelnen Elemente des Sehvorgangs analysieren und quantitativ beschreiben. Ob die berechneten Flächen den angestrebten Sehkomfort liefern, wird mit Hilfe sogenannter Tragetests beurteilt, wobei vorab Prototypen des Glases angefertigt werden. Mit Hilfe von Messungen der Oberflächen wird sichergestellt, daß keine Abweichungen zum rechnerischen Konzept auftreten. In Abhängigkeit vom Resultat der Tragetests muß dieser Kreis unter Umständen mehrere Male durchgeführt werden.

Für die Berechnung von individuellen Brillengläsern muß die Optimierung innerhalb sehr kurzer Zeit erfolgen, da aufgrund der großen Vielfalt von Wirkungskombinationen diese nur auf Bestellung berechnet werden können.

Aufgabe der Erfindung ist es, ein Verfahren anzugeben, mit dem in sehr kurzer zeit individuelle Progressivgläser berechnet und optimiert werden, wobei bei den Progressivgläsern entlang der Hauptblicklinie optimale Eigenschaften vorliegen, d. h. dass Hauptlinie und Hauptblicklinie zusammenfallen und alle individuellen Parameter berücksichtigt werden.

Zur Lösung dieser Aufgabe wird wird ein Verfahren angegeben, das durch die folgenden Schritte gekennzeichnet ist:

- Erzeugen eines Grunddesigns einer progressiven Fläche von Brillengläsern anhand theoretischer Vorgaben, wobei das Grunddesign für eine vorgegebene Wirkung und durchschnittliche Individualparameter berechnet wird,
- Erzeugen von Startdesigns für Trageversuche auf der Basis des Grunddesigns,
- Berechnen von individuellen Progressivgläsern aus den Startdesigns für Trageversuche, die individuellen Daten von Trageversuchspersonen entsprechen,
- Anpassen der Startdesigns für Trageversuche aufgrund von Trageversuchen und Erstellen der endgültigen Startdesigns für die Produktion aus den angepaßten Startdesigns, und
- Berechnen der individuellen Brillengläser aus den Startdesigns für die Produktion nach individuellen Kundendaten,

wobei

die Startdesigns für Trageversuche und die Startdesigns für die Produktion eine begrenzte Anzahl von Progressivgläsern sind, welche für die durchschnittlichen Individualparameter berechnet werden und welche einen vorgegebenen Wirkungsbereich abdecken,

die Startdesigns für Trageversuche zumindest eine Serie von Progressivgläsern für Myope, eine Serie von Progressivgläsern für Emmetrope und eine Serie von Progressivgläsern für Hyperope umfassen, wobei eine Serie zumindest zwei Progressivgläser mit unterschiedlicher Addition umfaßt, und wobei

die Startdesigns für die Produktion dichter besetzt sind als die Startdesigns für die Trageversuche.

Zunächst wird ein Grunddesign bzw. eine Reihe von Grunddesigns erzeugt. Diese werden aufgrund der theoretischen Daten analysiert. Die Grunddesigns werden dann solange geändert und angepasst, bis sie den Vorgaben (z. B. aus Grundsatzuntersuchungen oder Trageversuchen) entsprechen. Dieses Grunddesign wird für eine schwache Wirkung und Default- oder Standardwerte, die weiter unten beschrieben sind, berechnet. Im Prinzip kann ein solches Grunddesign mit einem Verfahren, das in der WO 01/81979 beschrieben ist, erzeugt werden.

Im nächsten Schritt werden aus den Grunddesigns sogenannte Startdesigns erzeugt. Startdesigns sind eine begrenzte Anzahl von Progressivgläsern, die für Defaultwerte der individuellen Parameter berechnet wurden und den Wirkungsbereich abdecken. Werden nur wenige Brillengläser für das Startdesign bereitgestellt, so ist der Aufwand viel geringer. Allerdings kann man dann noch schlechter auf die verschiedenen Anforderungen von Hyperopen, Myopen usw. eingehen und der Aufwand bei der Optimierung der individuellen Progressivgläser wird größer. Aus diesem Grund wird man, wenn man verschiedene Grunddesigns ( in der Regel 3 - 4) in Trageversuchen gegeneinander testen will, das Startdesign niedrig besetzen. Das endgültige Startdesign für die Produktion wird dann in der Regel eher dicht besetzt sein.

Es werden mindestens eine Serie startdesigns für Trageversuche für Myope, eine Serie für Emmetrope und eine Serie für Hyperope bereitstellen.

In der nachfolgenden Tabelle ist ein Beispiel angegeben:

| Sph/Add [dpt] | -4 | 0 | +4 |
|---|---|---|---|
| 1,5 | + | + | + |
| 2,0 | + | + | + |
| 2,5 | + | + | + |

Für die Berechnung und Optimierung der Progressivgläser werden durchschnittliche Individualparameter berücksichtigt, in der Regel die nachfolgenden Werte:

Verordneter Zylinder = 0 dpt; Prisma vertikal und horizontal = 0 cm/m;
Definition der Wirkung in den Bezugspunkten (Gebrauchsstellung, Scheitelmessung etc.);
Pupillendistanz = 63 mm; Hornhautscheitelabstand = 15 mm;
Augendrehpunktsabstand = 28,5 mm; Vorneigung = 8 Grad;
Fassungsscheibenwinkel (Seitenneigung) = 0 Grad;
Mittendicke oder Randdicke variiert in Abhängigkeit von Verordnung, Addition und Durchmesser;
Durchmesser = 70 mm;
Dickenreduktionsprisma variiert in Abhängigkeit von Verordnung, Addition und Durchmesser; Material = Material mit mittlerem Brechungsindex;
Objektabstand in der Ferne = 0 dpt; Objektabstand in der Nähe = -1000/380 mm oder Objektabstand in der Nähe = -Add (für Add > 2,5 dpt);
Die Basiskurve (Form (i.d.R eine Sphäre)und Durchbiegung (Brechwert) der zweiten Fläche) variiert in Abhängigkeit von Verordnung, Addition und Durchmesser.

Aus diesen Startdesigns werden die Progressivgläser berechnet, die den individuellen Daten der Trageversuchspersonen entsprechen. Das Verfahren zur Berechnung wird weiter unten beschrieben.

Als Alternative kann man auch alle Brillengläser für Trageversuche mit dem Verfahren, welches in der WO 01/81979 beschrieben ist, berechnen.

In einem zweiten Designloop kann man aufgrund der Trageversuche das Design entsprechend abändern und anpassen. In einer ersten Phase werden die verschiedenen Startdesigns in einem internen Trageversuch mit einer kleineren Anzahl von Probanden getestet. In einer zweiten Phase werden externe Trageversuche mit einer relativ großen Probandenzahl durchgeführt. Somit ergeben sich im Prinzip drei Designloops.

Wenn man das endgültige Design gefunden hat, muss man das Startdesign für die Produktion erstellen. Dies wählt man normalerweise dichter als die Startdesigns für den Trageversuch.

In der nachfolgenden Tabelle ist ein Beispiel angegeben, wobei für alle dargestellten Wirkungen Startdesigns erstellt werden:

| Sph/Add [dpt] | -10 | -5 | -1 | +2 | +5 | +8 |
|---|---|---|---|---|---|---|
| 1,0 | + | + | + | + | + | + |
| 1,5 | + | + | + | + | + | + |
| 2,0 | + | + | + | + | + | + |
| 2,5 | + | + | + | + | + | + |
| 3,0 | + | + | + | + | + | + |

Im nachfolgenden wird das Berechnungsverfahren näher erläutert:

Zunächst müssen vom Startdesign alle Parameter des Brillenglases abgespeichert werden. Dies beinhaltet neben dem bereits genannten individuellen Parametern noch die folgenden:

Flächendaten der progressiven Fläche;
Koordinaten der Bezugspunkte; Objektabstandsmodell als Funktion der Durchblickpunkte;
Akkomodationsmodell als Funktion des Objektabstandes;
Verlauf der Hauptlinie (in der WO 01/81979 beschrieben) und alle Sollvorgaben an allen Bewertungsstellen (Durchblickstellen).

Die progressive Fläche wird am besten mittels B-Splines beschrieben. Als freie Parameter hat man die Ordnung der Splines und die Anzahl der Koeffizienten. Je höher die Ordnung der Splines ist, desto feiner kann ein Intervall beschrieben werden, aber desto mehr neigen die Splines auch zur Schwingung. Aus diesem Grund bevorzugt man Splines 4. Ordnung oder insbesondere kubische Splines. Auch läßt sich durch die Anzahl der Koeffizienten steuern, wie variabel man eine Fläche beschreiben kann.

Jedoch steigt mit der Anzahl der Koeffizienten direkt die Komplexität des Optimierungsproblems und damit auch die Rechenzeit. Dennoch hat sich eine große Zahl von Koeffizienten (ca. 4.000) bewährt. Die Optimierung eines progressiven Brillenglases erfolgt in der Regel durch die Minimierung einer Zielfunktion. Die Zielfunktion kann beispielsweise wie folgt aussehen:

$$\min \sum ga_i(A_{ist} - A_{soll})_i^2 + gb_i(B_{ist} - B_{soll})_i^2 \cdots$$

Dabei sind A, B usw. die zu optimierenden Eigenschaften wie Astigmatismus, Brechwert, Verzeichnung, binokulare Imbalanzen, Gradienten von Astigmatismus und Brechwert, Verzerrungen usw. Allerdings ist es ungünstig, wenn man zu viele Eigenschaften in die Zielfunktion schreibt, da ein Progressivglas schon aufgrund eines Streifens zweiter Ordnung und einer Vorgabefunktion über das ganze Brillenglas beschrieben ist. Aus diesem Grund erschweren zu viele Eigenschaften die Optimierung aufgrund von möglichen widersprüchlichen Forderungen in der Zielfunktion. Deshalb sind zwei Eigenschaften in der Zielfunktion ausreichend. Andere Eigenschaften können später im Designloop über die Auswertung kontrolliert und eingestellt werden.

Zusätzlich kann jede Eigenschaft ortsabhängig über die Bewertungsstelle i gewichtet werden. So ist es möglich, eine Eigenschaft gegenüber der anderen Eigenschaft zu gewichten und zum anderen aber auch ortsabhängig zu gewichten, beispielsweise den Astigmatismus in der Ferne höher als in der Nähe.

Je mehr Bewertungsstellen man hat, desto länger dauert die Optimierung, weil an jeder Bewertungsstelle mittels Strahlen - und lokaler Wellenfrontdurchrechnung die entsprechenden Eigenschaften berechnet werden müssen. Jedoch ist es klar, dass mit vielen Bewertungsstellen das Brillenglas bzw. die Optimierung des Brillenglases viel besser und exakter gesteuert werden kann. Deshalb bevorzugt man die Verwendung von vielen Bewertungsstellen; in der Regel sind dies ca. 15.000 Bewertungsstellen.

Des weiteren ist es vorteilhaft, wenn sowohl die Koeffizienten als auch die Bewertungsstellen nicht äquidistant über das Brillenglas gleichverteilt sind, sondern in Bereichen, bei denen größere Änderungen der Eigenschaften vorliegen oder bei Bereichen, denen eine höhere Bedeutung zugemessen wird, die Anzahl der Bewertungsstellen bzw. Koeffizienten zu erhöhen.

Es ist wichtig, dass man die Sollvorgaben nicht als absolute Werte vorgibt sondern als Abweichungen oder zulässige Fehler. Im folgenden wird ein Beispiel angegeben:

Man möchte ein Progressivglas mit den Werten Sph 0,5 zyl 1,0 A 0 Grad Add 2,0 optimieren. Wenn man Absolutwerte vorgeben möchte, würde man z. B. im Fernbezugspunkt fordern: Soll Sph 0,5 zyl 1,0 A 0 Grad und im Nahbezugspunkt Soll Sph 2,5 zyl 1,0 A 0 Grad, da hier das Brillenglas exakt den Forderungen entsprechen soll. Dagegen würde man in der Peripherie Soll Sph 1,5 zyl 2,0 A 45 Grad fordern.

Die Sollvorgaben müssen immer sehr nahe am Ziel liegen und bei Progressivgläsern hat man in der Peripherie zwangsweise höhere Abbildungsfehler. Somit wird deutlich, wie wichtig geeignete Sollvorgaben für die Berechnung und Optimierung eines Progressivglases sind.

Werden Absolutwerte vorgegeben, muß man für jede Verordnung eigene Sollvorgaben bereitstellen. Dies ist insbesondere bei der Optimierung von individuellen Progressivgläsern von Nachteil.

Aus diesem Grund ist es besser, die Istwerte des Brillenglases mit dem Refraktionsdefizit des Auges zu kombinieren und anschließend mit den Sollvorgaben zu vergleichen. Die Kombination mit dem Auge erfolgt dabei am besten mit der Kreuzzylindermethode, die beispielsweise in der WO 01/81979 beschrieben ist. Dann würden die Sollvorgaben im obigen Beispiel im Fern- und Nahbezugspunkt, nämlich der Refraktionsfehler$_{Soll}$ und astigmatische Abweichung$_{Soll}$ 0 dpt betragen und in der Peripherie (beispielhaft) der Refraktionsfehler$_{Soll}$ 1,0 dpt und die astigmatische Abweichung$_{Soll}$ 1,25 dpt. Die Achslage würde somit aufgrund der Kreuzzylindermethode berücksichtigt werden. Somit ist man mit diesen Sollvorgaben von der Verordnung unabhängig. Die Unterschiede in den Sollvorgaben bzgl. Emmetropie, Myopie etc. erhält man über die unterschiedlichen Sollvorgaben bei den unterschiedlichen Wirkungen des Startdesigns. Dabei haben sich die astigmatische Abweichung und der Refraktionsfehler als geeignete Vorgaben erwiesen.

Weiter wesentlich ist, dass man die Bewertungsstellen nicht mit den kartesischen Koordinaten x und y abspeichert, sondern mit den Koordinaten u und y, wobei u der Abstand der Bewertungsstelle von der Hauptlinie ist, also u = x - $X_{HL}$(y). Dies ist wichtig, um bei der Berechnung des individuellen Brillenglases die Sollvorgaben auf einfache Weise, an die neue Hauptblicklinie anpassen zu können.

Im nächsten Schritt werden die Startdesigns für die Produktion erstellt.

Danach erfolgt die Berechnung der individuellen Brillengläser aus dem Startdesign nach individuellen Kundendaten.

Über eine Eingabemaske (bei Trageversuchen) oder bei der Online-Optimierung im Produktionsprozeß über eine Schnittstelle erhält das Berechnungsprogramm die neuen Individualparameter. Diese sind alle bereits genannten Parameter. Aufgrund der verordneten sphärischen Wirkung und der Addition wird aus dem Startdesign das nächstliegende Startglas mit allen Parametern und Sollvorgaben ausgewählt. Das zu optimierende Brillenglas wird mit dem ausgewählten Startglas gleichgesetzt und danach werden die Individualparameter des Startglases durch die neuen Parameter ersetzt, insbesondere durch die verordneten sphärischen, zylindrischen und prismatischen Werte, die Addition und das Dickenreduktionsprisma.

Danach wird das Objektabstands- und Akkommodationsmodell neu berechnet.

Danach wird das Brillenglas entsprechend den neuen Individualparametern (Pupillendistanz, Hornhautscheitelabstand, Augendrehpunktsabstand, Vorneigung und Seitenneigung) im Raum bzw. gegenüber dem Auge angeordnet.

Im nächsten Schritt werden das Material (Brechungsindex), der Durchmesser bzw. die Fassungsform und die Basiskurve ausgetauscht.

Danach wird die progressive Fläche mit einer atorischen Fläche überlagert. Die atorische Fläche wird so berechnet, dass im Fernbezugspunkt die sphärische und zylindrische Wirkung inklusive Achslage, vorzugsweise in der Gebrauchsstellung, der Verordnung entspricht, im Prismenbezugspunkt das vertikal- und Horizontalprisma, vorzugsweise in der Gebrauchsstellung, der Kombination aus verordnetem Prisma und Dickenreduktionsprisma entspricht und die Mitten- bzw. Randdicke dem Vorgabewert entspricht. Dies wird am besten mit einem Iterationsverfahren (z. B. Newton'sche Iteration mit 6 Variablen) erreicht. Die 6 Freiheitsgrade sind hierbei die beiden Hauptkrümmungen und die Achslage der atorischen Fläche, die Flächennormale (x- und y-Komponente) im Scheitel der gesamten progressiven Fläche und der Abstand der Vorder- zur Rückfläche.

Somit erhält man ein Progressivglas, dessen Qualität dem eines konventionellen Progressivglases entspricht, mit der Ausnahme, dass sich die progressive und astigmatische Wirkung auf einer Seite befindet. Es ist selbstverständlich auch möglich, die Überlagerung auf der nicht-progressiven Seite durchzuführen und diese dann zu optimieren. Dann erhält man ein individuelles Brillenglas mit einer progressiven Fläche und einer individuellen atorischen Fläche. Weiter ist es möglich, die Basisfläche torisch zu gestalten, die dann in erster Linie den verordneten Astigmatismus aufbringt und die progressive Fläche noch zusätzlich mit einem Korrektionstorus zu überlagern und diese Überlagerungsfläche dann entsprechend zu optimieren. Dann wird ein individuelles Brillenglas mit einer individuellen progressiven Fläche und einer torischen Fläche erhalten. Dabei kann sich die progressive Fläche entweder vorne oder hinten befinden.

Allerdings ist es bevorzugt, dass die Vorderfläche sphärisch oder zumindest rotationssymmetrisch ist und die Rückfläche eine individuelle progressive Fläche ist, die das gesamte Rezept, bestehend aus sphärischer und zylindrischer Verordnung und der Addition trägt, da dann die anamorphotische Verzerrung am geringsten ist (vgl. Auge und Brille, Bücherei des Augenarztes, Band 59 von Josef Reiner). Im nachfolgenden wird von dieser Variante ausgegangen. Jedoch ist das Verfahren auch auf alle anderen bereits beschriebenen Verfahrensvarianten anwendbar.

Im nächsten Schritt wandelt man die berechnete atorische Fläche in einen B-Spline, einem sogenannten Überlagerunsspline oder Optimierungsspline um. Auch ist es möglich, aus der atorischen Überlagerungsfläche und der darunter liegenden progressiven Fläche einen neuen B-Spline zu berechnen. Allerdings ist es günstiger, einen Überlagerungsspline zu verwenden.

Denn dann kann man die Anzahl der zu optimierenden Koeffizienten unabhängig von der darunter liegenden Basisfläche (progressive Fläche) wählen, ohne dass man Informationen verliert und die zu optimierende Fläche muß weniger Informationen tragen. Allerdings ist dies nur für die Optimierung der Koeffizienten von Bedeutung. Die Pfeilhöhe der Rückfläche entspricht immer der Summe aus der Basisfläche und dem Überlagerungsspline. Bei der Optimierung wird immer sowohl bei der Strahlen- als auch bei der Wellenfrontdurchrechnung die komplette Rückfläche berücksichtigt.

Im nächsten Schritt wird die Hauptblicklinie neu berechnet, da sie aufgrund der geänderten Positionierung des Brillenglases zum Auge und der geänderten prismatischen Wirkung in den Durchblickstellen von der alten Haupt- bzw. Hauptblicklinie abweicht.

Danach verschiebt man die Sollvorgaben um den Betrag, um welche die neue Hauptblicklinie gegenüber der alten Hauptblicklinie in jedem Horizontalschritt verschoben worden ist, d. h. jede Sollvorgabe erhält eine neue zugehörige u-Koordinate. Würde beispielsweise der x-Versatz der Hauptblicklinie auf Höhe des Nahbezugspunktes nun 3 statt 2 mm betragen, so würden sich die u-Koordinaten in diesem Horizontalschnitt um 1 mm verschieben. Es ist bevorzugt, dass die Sollvorgaben nicht von einem Startglas genommen werden, sondern entsprechend der Wirkung aus den benachbarten Brillengläsern des Startdesigns interpoliert werden.

Im nächsten Schritt optimiert man die progressive Fläche entweder mit einem käuflichen Optimierungsprogramm (z.B. aus der NAG-Bibliothek) oder mit einem Optimierungsprogramm, welches speziell auf das Problem und die verwendete Flächendarstellung abgestimmt ist. Hierbei ist letzteres bevorzugt. Meist hat man schon nach drei Optimierungsschritten das Ziel erreicht. Jedoch ist es besser, wenn sicherheitshalber 10 Öptimierungsschritte durchgeführt werden. Eine solche Optimierung benötigt aufgrund des idealen Startpunktes und der idealen Sollvorgaben und dem ideal abgestimmten Optimierer auf einem normalen PC (z. B. Intel Pentium 4 Prozessor mit 1800 MHz) weniger als 30 Sekunden.

Es wäre auch möglich, alle Online optimierten Flächen abzuspeichern, um dann bei gleichen individuellen Bestelldaten nicht nochmals optimieren zu müssen. Allerdings hat es sich gezeigt, dass das beschriebene Verfahren so stabil, schnell und zuverlässig ist, dass ein Suchalgorithmus aufwendiger wäre als einfach jede Verordnung neu zu berechnen.

Es hat sich als vorteilhaft herausgestellt, nicht die ganze Fläche des Brillenglases zu optimieren, sondern nur einen zentralen Bereich (ca. 20 - 30 mm) und diesen dann mit einem speziell entwickelten Extrapolationsprogramm zu erweitern. Dadurch kann man Rechenzeit einsparen, ohne dass die Qualität beeinflußt wird.

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im übrigen hinsichtlich der Offenbarung aller im Text nicht näher erläuterten erfindungsgemäßen Einzelheiten ausdrücklich verwiesen wird. Es zeigen:

Fig. 1: die Verteilung des Sehschärfeabfalls aufgrund der Abbildungsfehler bei einem progressiven Brillenglas aus dem Startdesign,

Fig. 2: die Verteilung des Sehschärfeabfalls aufgrund der Abbildungsfehler bei einem progressivem Brillenglas nach der Überlagerung mit einem Torus,

Fig. 3: die Verteilung des Sehschärfeabfalls aufgrund der Abbildungsfehler bei einem progressiven Brillenglas nach der Optimierung,

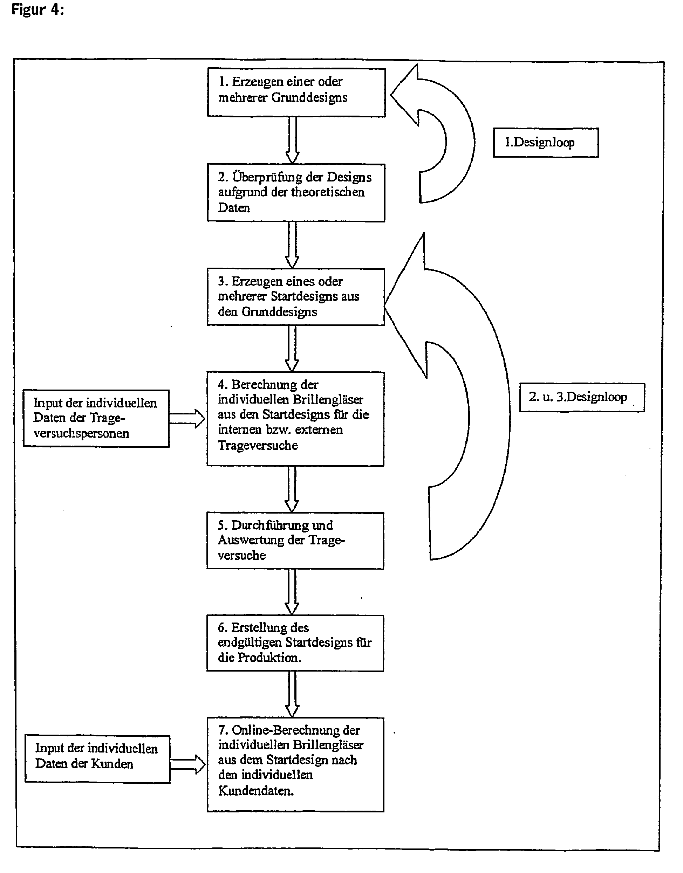

Fig. 4: einen Ablaufplan des Verfahrens und

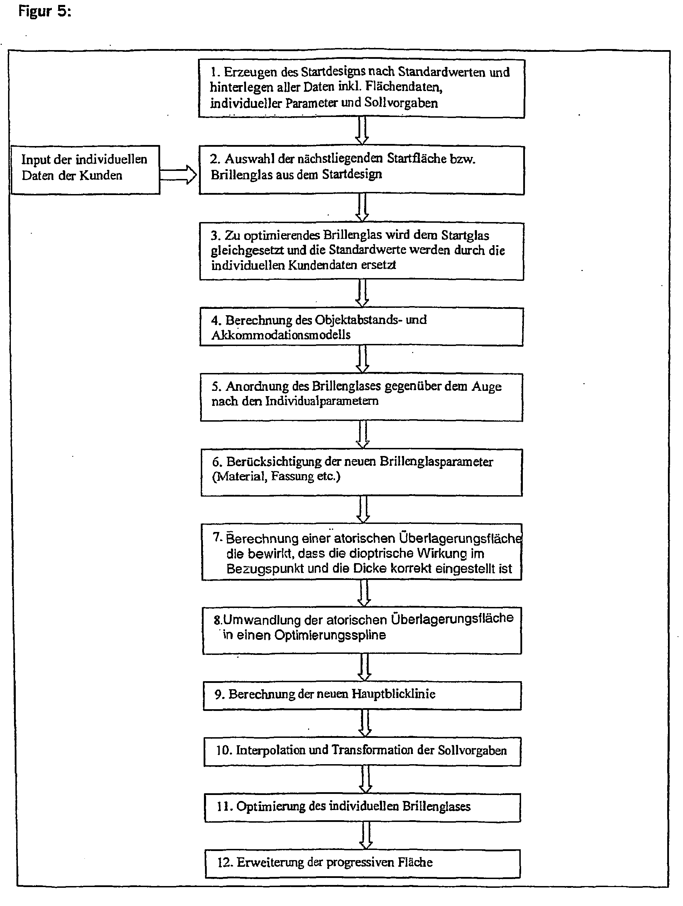

Fig. 5: den Ablaufplan des Online-Optimierungs- und -Berechnungsverfahrens.

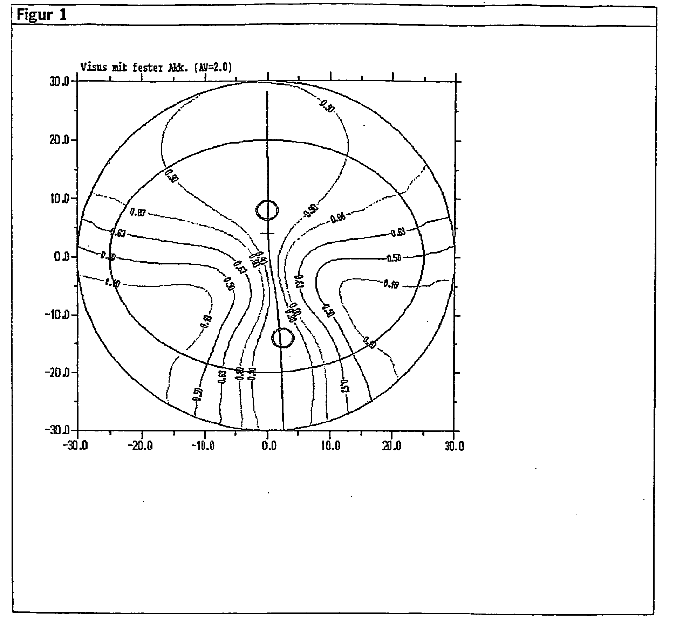

In Fig. 1 wurden folgende Standardwerte verwendet:

Verordnete Sphäre = -4,0 dpt; Addition 2,0 dpt; Verordneter Zylinder = 0 dpt; Prisma vertikal und horizontal = 0 cm/m;
Wirkung in den Bezugspunkten in der Gebrauchsstellung;
Pupillendistanz = 63 mm; Hornhautscheitelabstand = 15 mm;
Augendrehpunktsabstand = 28,5 mm; Vorneigung = 8 Grad;
Fassungsscheibenwinkel (Seitenneigung) = 0 Grad; Mittendicke = 2 mm; Durchmesser = 70 mm; Dickenreduktionsprisma = 1,0 cm/m; Material = Perfalit 1,6 n = 1,597; Objektabstand in der Ferne = 0 dpt; Objektabstand in der Nähe = -1000/380 mm; Basiskurve sph = 3,41 dpt. In Fig. 1 ist zu erkennen, dass die Isolinien vollständig symmetrisch zur Hauptlinie verlaufen und überall ein gleichmäßiger und weicher Übergang besteht und große Fern- und Nahsehbereiche vorliegen. So sollte auch ein Brillenglas mit abweichenden Individualparametern aussehen.

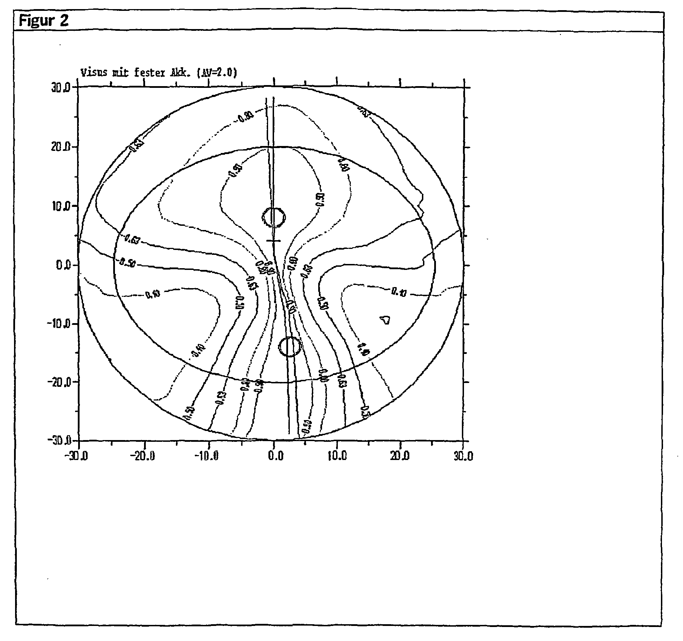

In Fig. 2 werden folgende Individualparameter vorgegeben:

Verordnete Sphäre = -3,5 dpt; Addition = 2,0 dpt; Verordneter Zylinder = 1 dpt; Achslage = 20 Grad; Prisma vertikal - 0,5 cm/m; Prisma horizontal = 1,0 cm/m;
Wirkung in den Bezugspunkten in der Gebrauchsstellung;
Pupillendistanz = 72 mm; Hornhautscheitelabstand = 19 mm;
Augendrehpunktsabstand = 32,5 mm; Vorneigung = 11 Grad; Fassungsscheibenwinkel (Seitenneigung) = 1 Grad;
Mittendicke = 2 mm; Durchmesser = 70 mm; Dickenreduktionsprisma = 1,0 cm/m; Material = Perfalit = 1,6 n = 1,597;
Objektabstand in der Ferne = 0 dpt; Objektabstand in der Nähe = -1000/380 mm; Basiskurve sph = 3,7 dpt.

Wie aus Fig. 2 zu erkennen ist, verlaufen die Isolienie nicht mehr symmetrisch zur Hauptlinie, die Übergänge sind nicht mehr weich und die Sehbereiche sind stark eingeschränkt. Ferner erkennt man die Verschiebung der Hauptblicklinie gegenüber der alten Haupt- bzw. Hauptblicklinie.

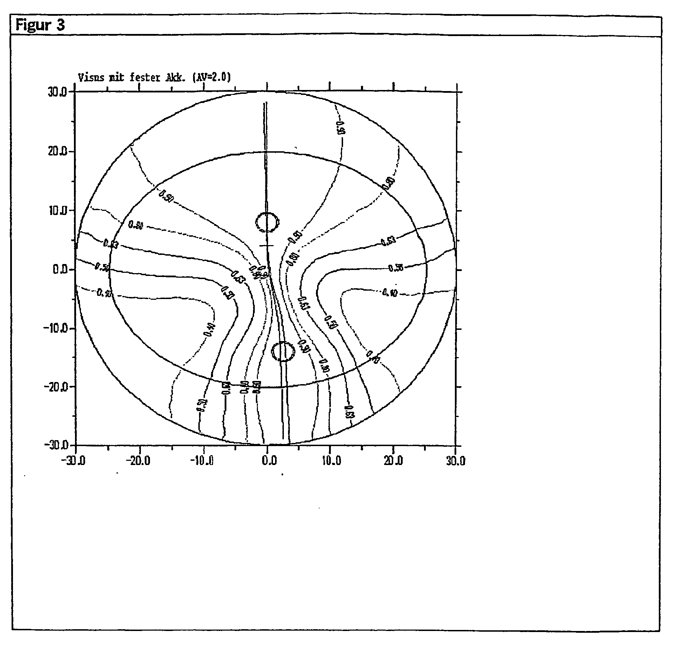

Fig. 3 zeigt folgende Individualparameter: Sphäre = -3,5 dpt; Addition = 2,0 dpt; Verordneter Zylinder = 1 dpt; Achslage = 20 Grad;
Wirkung in den Bezugspunkten in der Gebrauchsstellung; Prisma vertikal = -0,5 cm/m; Prisma horizontal = 1,0 cm/m;
Pupillendistanz = 72 mm; Hornhautscheitelabstand = 19 mm; Augendrehpunktsabstand = 32,5 mm; Vorneigung = 11 Grad; Fassungsscheibenwinkel (Seitenneigung) = 1 Grad; Mittendicke = 2 mm; Durchmesser = 70 mm; Dickenreduktionsprisma = 1,0 cm/m; Material = Perfalit 1,6 n = 1,597; Objektabstand in der Ferne = 0 dpt; Objektabstand in der Nähe = - 1000/380 mm; Basiskurve sph = 3,7 dpt.

In Fig. 3 ist deutlich zu erkennen, dass die Isolinien wieder symmetrisch zur Hauptlinie verlaufen, die Übergänge wieder weicher und die Sehbereiche deutlich erweitert sind. Auch erkennt man die Verschiebung der Hauptblicklinie gegenüber der alten Haupt- bzw. der Haupblicklinie und ferner, dass die Isolinien nun symmetrisch zur neuen Hauptblicklinie verlaufen.

**Patentansprüche**

1. Computergestütztes Verfahren zum Berechnen eines individuellen Progressivglases, **gekennzeichnet durch** die folgenden Schritte:

- Erzeugen eines Grunddesigns einer progressiven Fläche von brillengläsern anhand theoretischer Vorgaben, wobei das Grunddesign für eine vorgegebene Wirkung und durchschnittliche Individualparameter berechnet wird,
- Erzeugen von Startdesigns für Trageversuche auf der basis des Grunddesigns,
- Berechnen von individuellen Progressivgläsern aus den Startdesigns für Trageversuche, die individuellen Daten von Trageversuchspersonen entsprechen,
- Anpassen der Startdesigns für Trageversuche aufgrund von Trageversuchen und Erstellen der endgültigen Startdesigns für die Produktion aus den angepaßten Startdesigns, und
- Berechnen der individuellen Brillengläser aus den Startdesigns für die Produktion nach individuellen Kundendaten,

wobei

die Startdesigns für Trageversuche und die Startdesigns für die Produktion eine begrenzte Anzahl von Progressivgläsern sind, welche für die durchschnittlichen Individualparameter berechnet werden und welche einen vorgegebenen Wirkungsbereich abdecken,

die Startdesigns für Trageversuche zumindest eine Serie von Progressivgläsern für Myope, eine Serie von Progressivgläsern für Emmetrope und eine Serie von Progressivgläsern für Hyperope umfassen, wobei eine Serie zumindest zwei Progressivgläser mit unterschiedlicher Addition umfaßt, und wobei

die Startdesigns für die Produktion dichter besetzt sind als die Startdesigns für die Trageversuche.

2. Verfahren nach Anspruch 1, **dadurch gekennzeichnet, dass** das Berechnen der individuellen Brillengläser aus den Startdesigns für Trageversuche oder aus den Startdesigns für die Produktion nach individuellen Kundendaten gemäß folgender Schritte erfolgt:

- Speichern der dem Startdesign für Trageversuche oder dem Startdesign für die Produktion zugeordneten Standardwerte der individuellen Parameter, Flächendaten und Sollvorgaben,
- Auswahl einer Startfläche aus dem Startdesign für Trageversuche oder aus dem Startdesign für die Produktion,
- Ersetzen der Standardwerte durch individuelle Kundendaten,
- Berechnen des Objektabstands- und Akkomodationsmodells,
- Anordnen des Brillenglases gegenüber dem Auge nach den Individualparametern,
- Berücksichtigen der neuen Brillenglasparameter,
- Berechnen einer torischen oder atorischen Überlagerungsfläche, wobei die Überlagerungsfläche derart berechnet wird, eine vorgegebene dioptrische Wirkung des individuellen Brillenglases in den Bezugspunkten sowie eine vorgegebene Dicke des individuellen Brillenglases einzustellen,
- Umwandeln der torischen oder atorischen Überlagerungsfläche in einen Optimierungsspline,
- Berechnen der neuen Hauptblicklinie,
- Interpolation und Transformation der Sollvorgaben,
- Optimieren des individuellen Brillenglases und
- Erweitern der progressiven Fläche.

## Claims

1. Computer-assisted method for calculating an individual progressive lens, **characterised by** the following steps:

- creation of a basic design of a progressive surface of eyeglass lenses based on theoretical specifications, the basic design being calculated for a predetermined effect and average individual parameters,
- creation of starting designs for wearing tests based on the basic design,
- calculation of individual progressive lenses from the starting designs for wearing tests which correspond to individual data of test persons who are to wear eyeglasses with said lenses,
- adaptation of the starting designs for wearing tests based on wearing tests and creation of the final starting designs for production from the adapted starting designs, and
- calculation of the individual eyeglass lenses from the starting designs for production according to individual customer data,

the starting designs for wearing tests and the starting designs for production being a limited number of progressive lenses which are calculated for the average individual parameters and which cover a predetermined range of effect, the starting designs for wearing tests comprising at least one series of progressive lenses for myopia, one series of progressive lenses for emmetropia and one series of progressive lenses for hyperopia, and one series comprising at least two progressive lenses with differing addition, and

the starting designs for production having more options than the starting designs for the wearing tests.

2. Method according to claim 1, **characterised in that** the individual eyeglass lenses are calculated from the starting designs for wearing tests or from the starting designs for production according to individual customer data in accordance with the following steps:

- storage of the standard values, associated with the starting design for wearing tests or with the starting design for production, of the individual parameters, surface data and set specifications,
- selection of a starting surface from the starting design for wearing tests or from the starting design for production,

- replacement of the standard values by individual customer data,
- calculation of the object distance and accommodation model,
- positioning of the eyeglass lens with respect to the eye according to the individual parameters,
- consideration of the new eyeglass lens parameters,
- calculation of a toric or atoric superimposed surface, said superimposed surface being calculated to adjust a predetermined dioptric effect of the individual eyeglass lens at the reference points as well as a predetermined thickness of the individual eyeglass lens,
- conversion of the toric or atoric superimposed surface into an optimisation spline,
- calculation of the new principal line of vision,
- interpolation and transformation of the set specifications,
- optimisation of the individual eyeglass lens, and
- expansion of the progressive area.

**Revendications**

**1.** Procédé assisté par ordinateur pour calculer un verre progressif individuel, **caractérisé par** les étapes suivantes consistant à :

- générer un modèle de base d'une surface progressive de verres de lunettes à l'aide de spécifications théoriques, le modèle de base étant calculé pour un effet spécifié et des paramètres individuels moyens ;
- générer des modèles de départ pour essayage sur la base du modèle de base ;
- calculer des verres progressifs individuels à partir des modèles de départ pour essayage correspondant à des données individuelles de personnes effectuant des essayages ;
- adapter les modèles de départ pour essayage en fonction d'essayages et créer les modèles de départ définitifs pour la production à partir des modèles de départ adaptés ; et
- calculer les verres de lunettes individuels à partir des modèles de départ pour la production selon des données client individuelles ;

dans lequel

les modèles de départ pour essayage et les modèles de départ pour la production correspondent à un nombre limité de verres progressifs qui sont calculés pour les paramètres individuels moyens et qui couvrent une plage utile spécifiée,

les modèles de départ pour essayage comprennent au moins une série de verres progressifs pour les myopes, une série de verres progressifs pour les emmétropes et une série de verres progressifs pour les hypéropes, une série comprenant au moins deux verres progressifs d'addition différente, et

dans lequel les modèles de départ pour la production sont occupés de façon plus dense que les modèles de départ pour les essayages.

**2.** Procédé selon la revendication 1, **caractérisé en ce que** le calcul des verres de lunettes individuels à partir des modèles de départ pour essayage ou à partir des modèles de départ pour la production s'effectue en fonction de données client individuelles selon les étapes suivantes consistant à :

- enregistrer les valeurs standard des paramètres individuels, des données de surface et des spécifications théoriques, attribuées au modèle de départ pour essayage ou au modèle de départ pour la production ;
- sélectionner une surface de départ à partir du modèle de départ pour essayage ou à partir du modèle de départ pour la production ;
- remplacer les valeurs standard par des données client individuelles ;
- calculer la modélisation de la distance frontale et de l'accommodation ;
- agencer le verre de lunettes face à l'oeil selon les paramètres individuels ;
- prendre en compte les nouveaux paramètres de verre de lunettes ;
- calculer une surface de superposition torique ou atorique, la surface de superposition étant calculée de façon à régler un effet dioptrique spécifié du verre de lunettes individuel au niveau des points de référence ainsi qu'une épaisseur spécifiée du verre de lunettes individuel ;
- convertir la surface de superposition torique ou atorique en une courbe spline d'optimisation ;
- calculer la nouvelle ligne de visée principale ;
- interpoler et transformer les spécifications théoriques ;
- optimiser le verre de lunettes individuel ; et

- élargir la surface progressive.

## Figur 1

Figur 2

Figur 3

Visus mit fester Akk. (AV=2.0)

**Figur 4:**

1. Erzeugen einer oder mehrerer Grunddesigns

1.Designloop

2. Überprüfung der Designs aufgrund der theoretischen Daten

3. Erzeugen eines oder mehrerer Startdesigns aus den Grunddesigns

2. u. 3.Designloop

Input der individuellen Daten der Trage-versuchspersonen

4. Berechnung der individuellen Brillengläser aus den Startdesigns für die internen bzw. externen Trageversuche

5. Durchführung und Auswertung der Trage-versuche

6. Erstellung des endgültigen Startdesigns für die Produktion.

Input der individuellen Daten der Kunden

7. Online-Berechnung der individuellen Brillengläser aus dem Startdesign nach den individuellen Kundendaten.

**Figur 5:**

Input der individuellen Daten der Kunden

1. Erzeugen des Startdesigns nach Standardwerten und hinterlegen aller Daten inkl. Flächendaten, individueller Parameter und Sollvorgaben

2. Auswahl der nächstliegenden Startfläche bzw. Brillenglas aus dem Startdesign

3. Zu optimierendes Brillenglas wird dem Startglas gleichgesetzt und die Standardwerte werden durch die individuellen Kundendaten ersetzt

4. Berechnung des Objektabstands- und Akkommodationsmodells

5. Anordnung des Brillenglases gegenüber dem Auge nach den Individualparametern

6. Berücksichtigung der neuen Brillenglasparameter (Material, Fassung etc.)

7. Berechnung einer atorischen Überlagerungsfläche die bewirkt, dass die dioptrische Wirkung im Bezugspunkt und die Dicke korrekt eingestellt ist

8. Umwandlung der atorischen Überlagerungsfläche in einen Optimierungsspline

9. Berechnung der neuen Hauptblicklinie

10. Interpolation und Transformation der Sollvorgaben

11. Optimierung des individuellen Brillenglases

12. Erweiterung der progressiven Fläche

**IN DER BESCHREIBUNG AUFGEFÜHRTE DOKUMENTE**

**In der Beschreibung aufgeführte Patentdokumente**

• WO 0181979 A

**In der Beschreibung aufgeführte Nicht-Patentliteratur**

• **W. Köppen.** Konzeption und Entwicklung von Progressivgläsern. *Sonderdruck der WVAO,* 1995, vol. 47, 92-97